# EUROPÄISCHE PATENTSCHRIFT

(11) **EP 1 851 944 B1**
(45) Veröffentlichungstag und Bekanntmachung des Hinweises auf die Patenterteilung: **07.08.2013**
(21) Anmeldenummer: 05794651.9
(22) Anmeldetag: 05.10.2005
(51) Int. Cl.: H04M 7/00, H04L 29/06

(54) **VERFAHREN ZUM AUFNEHMEN EINER VOIP-KOMMUNIKATION MITTELS EINER PEER-TO-PEER-DATENBANK**
METHOD FOR INITIATING A VOIP COMMUNICATION USING A PEER-TO-PEER DATABASE
PROCEDE DE DECLENCHEMENT D'UNE COMMUNICATION VOIP AU MOYEN D'UNE BASE DE DONNEES PAIR-A-PAIR

(30) Priorität: 24.02.2005 DE 102005008590
(43) Veröffentlichungstag der Anmeldung: 07.11.2007
(73) Patentinhaber: Siemens Enterprise Communications GmbH & Co. KG, 81379 München (DE)
(72) Erfinder: NEUHAUS, Ralf, 44534 Lünen (DE)
(74) Vertreter: Fritzsche, Thomas
(86) Internationale Anmeldenummer: PCT/EP2005/055011
(87) Internationale Veröffentlichungsnummer: WO 2006/089593

(56) Entgegenhaltungen:
- EP-A- 1 507 395
- US-A1- 2003 108 176
- US-A1- 2003 206 536
- BRYAN COLLEGE OF WILLIAM AND MARY C JENNINGS CISCO SYSTEMS D: "A P2P Approach to SIP Registration" IETF STANDARD-WORKING-DRAFT, INTERNET ENGINEERING TASK FORCE, IETF, CH, 20. Januar 2005 (2005-01-20), XP015011205 ISSN: 0000-0004

## Beschreibung

Die Erfindung betrifft Verfahren zum Betreiben eines eine Mehrzahl von Knoten umfassenden Kommunikationsnetzes, wobei eine Datenbank verteilt auf Knoten gespeichert wird.

In Kommunikationssystemen oder -netzen werden Nachrichten von einem Sender an einen oder mehrere Empfänger übertragen. Die für die Nachrichtenübertragung verwendeten Übertragungsmedien und -protokolle hängen von der konkreten Ausgestaltung des Kommunikationssystems ab. Beispiele für Kommunikationssysteme sind Funkkommunikationssysteme wie zellulare Mobilfunkkommunikationssysteme oder WLAN's (Wireless Local Area Networks), oder leitungsgebundene Kommunikationssysteme wie das öffentliche Telefonnetz oder LAN's (Local Area Networks) oder Unternehmens-Kommunikationsnetze.

Kommunikationen zwischen Kommunikationsendgeräten sind sowohl innerhalb eines Kommunikationsnetzes, als auch zwischen Kommunikationsendgeräten verschiedener Kommunikationssysteme möglich. Initiiert ein Knoten eines ersten Netzes die Aufnahme der Kommunikation mit einem Knoten eines zweiten Kommunikationsnetzes, so handelt es sich hierbei aus Sicht des ersten Netzes um eine ausgehende Kommunikation. Initiiert ein Knoten des zweiten Netzes hingegen die Aufnahme der Kommunikation mit einem Knoten des ersten Netzes, so handelt es sich aus Sicht des ersten Netzes um eine kommende Kommunikation. Die Aufnahme einer Kommunikation erfolgt in Regel durch Austausch geeigneter Signalisierungsnachrichten.

Das Dokument US 2002/0143855 A1 beschreibt ein Peer-System, in welchem zwei Gruppen von Peers existieren, wobei Peers einer Gruppe nicht mit Peers der anderen Gruppe direkt kommunizieren können. Es existiert ein Relay-Knoten, welcher Nachrichten zwischen den beiden Gruppen weiterleitet.

Das Dokument US 2004/0260761 A1 beschreibt ein Peer-to-Peer Netzwerk zur Erkennung von Geräten. Hierzu gibt jedes Gerät eine Identifikationsdatei in das Peer-to-Peer Netz, welche durch ein Suchgerät durchsucht und gefiltert werden kann, um geeignete Partner zu ermitteln.

Das Dokument DE 103 24 372 A1 beschreibt das Anmelden eines Endgerätes an einem Kommunikationsknoten eines Kommunikationsnetzwerkes. Hierzu greift das Endgerät auf einen Informationsspeicher zu, in welchem die Kommunikationsknoten registriert sind.

Das Dokument "Newton, Harry: Newton's Telecom Dicionary. 20., überarbeitete und erweiterte Auflage, San Francisco, CA, USA: CMP Books, März 2004, Seite 754, Lexikoneintrag "Skype", ISBN 1-57820-309-0" beschreibt Skype, eine Software, welche es PCs erlaubt, über das Internet Sprach-Kommunikation auszutauschen. Skype benutzt VoIP und Peer-to-Peer Technologie.

Die Druckschrift US 2003/0206536 A1 beschreibt ein Verfahren zur Registrierung einer temporären öffentlichen IP-Adresse eines Funkgerätes bei einem SIP Server, gemäß dem Oberbegriff des Anspruchs 1, sowie einen entsprechenden Knoten für ein Kommunikationsnetz, gemäß dem Oberbegriff des Anspruchs 11.

Die Druckschrift "Bryan, College of Williams and Mary, C. Jennings, Cisco Systems: A P2P Approach to SIP Registration", IETF Standard-Working-Draft, Internet Engineering Task Force, IETF, CH, 20. Januar 2005, XP015011205, ISSN: 0000-0004, beschreibt eine SIP-Registrierung zwischen Knoten, welche Peers sind.

Die Druckschrift US 2003/0108176 A1 beschreibt ein Verfahren zur Rufweiterleitung in einem IP-Telefonnetz, gemäß dem Oberbegriff des Anspruchs 4, sowie einen entsprechenden Knoten für ein Kommunikationsnetz, gemäß dem Oberbegriff des Anspruchs 12.

Der Erfindung liegt die Aufgabe zugrunde, sowohl in Bezug auf ausgehende als auch in Bezug auf kommende Kommunikationen effiziente Verfahren zum Betreiben eines Kommunikationsnetzes aufzuzeigen, bei denen die Datenbankausfallsicherheit erhöht ist. Weiterhin sollen entsprechende Vorrichtungen bzw. Knoten zur Durchführung der Verfahren vorgestellt werden.

Diese Aufgabe wird durch ein Verfahren mit den Merkmalen des Anspruchs 1 bzw. den Merkmalen des Anspruchs 4 sowie durch einen Knoten mit den Merkmalen des Anspruchs 11 bzw. 12 gelöst.

Bei dem ersten erfindungsgemäßen Verfahren zum Betreiben eines eine Mehrzahl von Knoten umfassenden Kommunikationsnetzes wird eine Datenbank verteilt auf Knoten gespeichert. Ein erster Knoten fragt für eine von ihm initiierte Aufnahme einer Kommunikation mit einem Kommunikationspartner eines externen Kommunikationssystems von der Datenbank Identifikationsinformationen zur Identifikation und/oder Adressierung des ersten Knotens durch den Kommunikationspartner ab.

Es wird ein Kommunikationsnetz betrachtet, welches eine Mehrzahl von Knoten umfasst. Vorzugsweise handelt es sich bei zumindest manchen der Knoten des Kommunikationsnetzes um Kommunikations-Endgeräte, wie zum Beispiel um Telefone. In diesem Fall können neben den Kommunikations-Endgeräten zentrale Einrichtungen vorhanden sein, welche nicht als Kommunikations-Endgeräte fungieren. Es ist jedoch auch möglich, dass es sich bei allen Knoten des Kommunikationsnetzes um Kommunikations-Endgeräte handelt.

Es wird eine verteilte Datenbank verwendet, wobei bei der Speicherung der Datenbank mehrere oder alle Knoten des Kommunikationsnetzes beteiligt sind. Es existiert somit keine zentrale Einrichtung, welche die gesamte Datenbank speichert. Insbesondere ist es vorteilhaft, wenn auch der erste Knoten in seinem Speicher einen Teil der Datenbank abgelegt hat, d.h. wenn auch der erste Knoten an der Speicherung der Datenbank beteiligt ist.

Ein erster Knoten des Kommunikationsnetzes initiiert die Aufnahme einer Kommunikation mit einem Kommunikationspartner eines externen Kommunikationssystems. Dies bedeutet, dass sich im Rahmen der Aufnahme der Kommunikation der erste Knoten zuerst bei dem externen Kommunikationspartner meldet, und nicht umgekehrt. In diesem Fall handelt es sich aus Sicht des Kommunikationsnetzes um eine ausgehende Kommunikation. Die Knoten des Kommunikationsnetzes können mit externen Kommunikationspartnern zum Beispiel über einen Verbindungsknoten kommunizieren, welcher Nachrichten zwischen den Knoten des Kommunikationsnetzes und externen Kommunikationspartnern weiterleitet.

Für die Aufnahme der Kommunikation mit dem externen Kommunikationspartner fragt der erste Knoten Identifikationsinformationen von der Datenbank ab. Hierbei kann es sich insbesondere um eine Rufnummer des Kommunikationsnetzes handeln, und/oder eine IP-Adresse des Kommunikationsnetzes, und/oder einen Namen in Kombination mit einem Passwort, und/oder eine andere Teilnehmerkennung. Vorzugsweise handelt es sich bei diesen Identifikationsinformationen um Informationen, welche zur Aufnahme der Kommunikation mit dem externen Kommunikationspartner benötigt werden, dem ersten Knoten jedoch vor der Abfrage bei der Datenbank nicht vorliegen.

In Weiterbildung der Erfindung werden zuvor die Identifikationsinformationen von einem zweiten Knoten dem Kommunikationspartner übermittelt und in die Datenbank eingegeben. Vorteilhaft ist es, wenn auch der zweite Knoten an der Speicherung der Datenbank beteiligt ist. Die Identifikationsinformationen kann der zweite Knoten dem Kommunikationspartner zum Beispiel im Rahmen einer Registrierung übermitteln. Durch die Registrierung ist der zweite Knoten dem Kommunikationspartner unter den Identifikationsinformationen bekannt. Vorteilhaft ist es, wenn zwar der zweite Knoten eine derartige Registrierung bei dem externen Kommunikationspartner durchgeführt hat, der erste Knoten jedoch dem externen Kommunikationspartner nicht aufgrund einer Registrierung bekannt ist.

Bei dem zweiten erfindungsgemäßen Verfahren zum Betreiben eines eine Mehrzahl von Knoten umfassenden Kommunikationsnetzes wird eine Datenbank verteilt auf Knoten gespeichert. Bei einer von einem Kommunikationspartner eines externen Kommunikationssystems initiierten Aufnahme einer Kommunikation mit einem ersten Knoten erfolgt eine Benachrichtigung eines zweiten Knotens über die von dem Kommunikationspartner initiierte Aufnahme der Kommunikation unter Verwendung der Datenbank. Anschließend wird die Aufnahme der Kommunikation zwischen dem zweiten Knoten und dem Kommunikationspartner fortgeführt.

Obige Erläuterungen hinsichtlich der Speicherung der Datenbank durch die Knoten des Kommunikationsnetzes, sowie hinsichtlich der Ausgestaltungen der Knoten des Kommunikationsnetzes gelten auch für das zweite erfindungsgemäße Verfahren. Das zweite erfindungsgemäße Verfahren betrifft die Aufnahme einer Kommunikation, welche von einem externen Kommunikationspartner initiiert wird. Dies bedeutet, dass der externe Kommunikationspartner im Rahmen der Aufnahme der Kommunikation sich zuerst bei dem ersten Knoten meldet, und nicht umgekehrt. Hierbei handelt es sich somit aus der Sicht des Kommunikationsnetzes um eine kommende Kommunikation.

Im Rahmen der von dem externen Kommunikationspartner initiierten Aufnahme der Kommunikation wird ein erster Knoten von dem Kommunikationspartner kontaktiert. Informationen über diese Kontaktaufnahme werden dem zweiten Knoten mitgeteilt, wobei bei der Benachrichtigung des zweiten Knotens die Datenbank beteiligt ist. So kann zum Beispiel der erste Knoten die Datenbank über die Aufnahme der Kommunikation durch den externen Kommunikationspartner benachrichtigen, woraufhin die Datenbank den zweiten Knoten benachrichtigt. Alternativ kann der erste Knoten von der Datenbank erfahren, dass der zweite Knoten zu benachrichtigen ist, und diese Benachrichtigung durchführen. Im Anschluss an die Benachrichtigung des zweiten Knotens über die Aufnahme der Kommunikation wird die Aufnahme der Kommunikation zwischen dem zweiten Knoten und dem Kommunikationspartner fortgeführt, wobei vorzugsweise der zweite Knoten an die Stelle des ersten Knotens tritt, welcher die Aufnahme der Kommunikation nicht fortführt.

Einer Weiterbildung der Erfindung gemäß übermittelt vor der von dem Kommunikationspartner initiierten Aufnahme der Kommunikation der erste Knoten dem Kommunikationspartner Identifikationsinformationen. Weiterhin ist in der Datenbank abgelegt, dass eine Benachrichtigung des zweiten Knotens erfolgen soll bei einer von dem Kommunikationspartner initiierten die Identifikationsinformationen zur Adressierung verwendenden Aufnahme der Kommunikation. Bei den Identifikationsinformationen handelt es sich vorzugsweise um eine Rufnummer. Dass die Information, dass der zweite Knoten zu benachrichtigen ist, in der Datenbank abgelegt ist, resultiert vorzugsweise daraus, dass der zweite Knoten der Datenbank ein Interesse an kommenden Kommunikationen betreffend die Identifikationsinformationen bekundet hat.

In Ausgestaltung der Erfindung benachrichtigt der erste Knoten den Kommunikationspartner, dass die Aufnahme der Kommunikation mit dem zweiten Knoten fortgeführt werden soll. Alternativ kann auch der zweite Knoten den Kommunikationspartner benachrichtigen, dass die Aufnahme der Kommunikation mit dem zweiten Knoten fortgeführt werden soll. Diese Benachrichtigungen von dem ersten oder dem zweiten Knoten an den Kommunikationspartner enthalten vorzugsweise eine Identifikationsinformation des zweiten Knotens, welche von dem Kommunikationspartner zur Adressierung des zweiten Knotens verwendet werden soll.

Besonders vorteilhaft ist es, wenn die Knoten des Kommunikationssystems hinsichtlich des Zugriffs auf die Datenbank gleichberechtigt sind. Der Zugriff auf die Datenbank betrifft sowohl das Abfragen von Informationen von der Datenbank als auch das Ablegen von Informationen in die Datenbank. Vorzugsweise handelt es sich bei der Datenbank um eine Peer-to-Peer-Datenbank, und der Zugriff auf die Datenbank erfolgt unter Verwendung eines Peer-to-Peer-Verfahrens. Beispiele für Peer-to-Peer-Verfahren sind: DHT-basierte Verfahren (DHT: Distributed Hash Table) wie CHORD, Tapestry, Kademlia, von DHTbasierten Verfahren abgeleitete Verfahren, oder auch andere Verfahren wie Gnutella, Opennap, edonkey, Fasttrack.

In Ausgestaltung der Erfindung erfolgt die Aufnahme der Kommunikation sowohl in Bezug auf ausgehende als auch in Bezug auf kommende Kommunikationen unter Verwendung von SIP (Session Initiation Protocol). Bei der Kommunikation handelt es sich vorzugsweise um eine VoIP-Kommunikation (VoIP: Voice over IP).

Ein erster erfindungsgemäßer Knoten für ein Kommunikationsnetz weist Mittel auf zum Mitwirken einer Speicherung einer auf mehrere Knoten des Kommunikationsnetzes verteilt gespeicherten Datenbank, sowie Mittel zum Initiieren einer Aufnahme einer Kommunikation mit einem Kommunikationspartner eines externen Kommunikationssystems, und Mittel zum Abfragen von der Datenbank von Identifikationsinformationen zur Identifikation und/oder Adressierung des Knotens durch den Kommunikationspartner und zum Verwenden der Identifikationsinformationen bei der Aufnahme der Kommunikation.

Ein zweiter erfindungsgemäßer Knoten für ein Kommunikationsnetz weist Mittel auf zum Mitwirken an einer Speicherung einer auf mehrere Knoten des Kommunikationsnetzes verteilt gespeicherten Datenbank, sowie Mittel zum Empfangen einer Benachrichtigung über eine von einem Kommunikationspartner eines externen Kommunikationssystems initiierte Aufnahme einer Kommunikation mit einem anderen Knoten des Kommunikationsnetzes von dem anderen Knoten oder von der Datenbank, und Mittel zum Fortführen der Aufnahme der Kommunikation mit dem Kommunikationspartner nach der Benachrichtigung.

Sowohl der erste als auch der zweite erfindungsgemäße Knoten eignen sich insbesondere zur Durchführung des jeweiligen erfindungsgemäßen Verfahrens, wobei dies auch auf die Ausgestaltungen und Weiterbildungen zutreffen kann. Hierzu können sie weitere geeignete Mittel aufweisen. Insbesondere ist es möglich, dass ein Knoten sowohl die Mittel des ersten als auch des zweiten erfindungsgemäßen Knotens umfasst.

Im folgenden wird die Erfindung anhand eines Ausführungsbeispiels näher erläutert. Dabei zeigen:
- Figur 1:: einen Ausschnitt aus einem Unternehmens-Kommunikationsnetz mit Anbindung an das Internet,
- Figur 2:: den Verlauf eines Nachrichtenaustausches bei einem kommenden Ruf gemäß dem Stand der Technik,
- Figur 3:: einen ersten erfindungsgemäßen Verlauf eines Nachrichtenaustausches bei einem kommenden Ruf,
- Figur 4:: einen zweiten erfindungsgemäßen Verlauf eines Nachrichtenaustausches bei einem kommenden Ruf,
- Figur 5:: einen dritten erfindungsgemäßen Verlauf eines Nachrichtenaustausches bei einem kommenden Ruf.

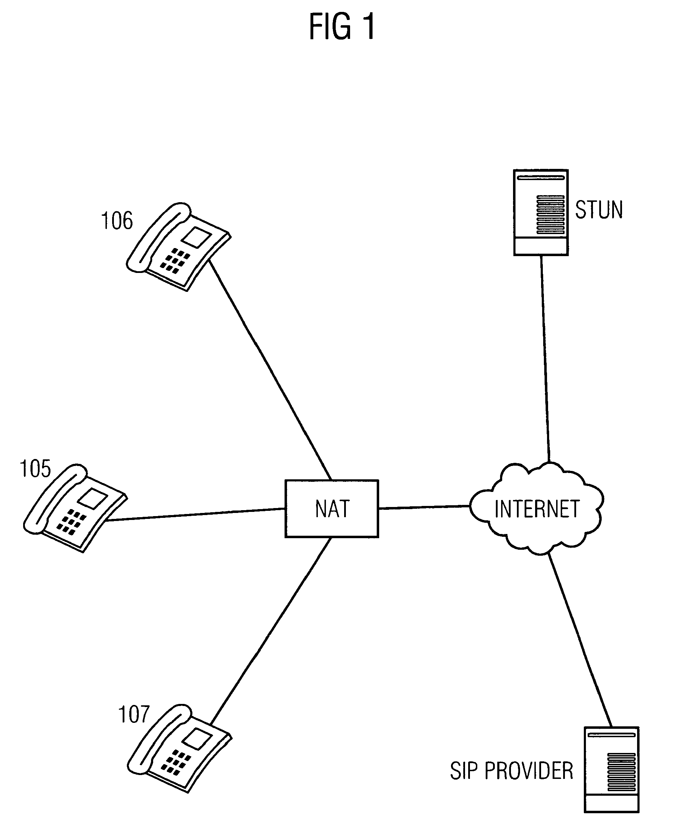

Der in Figur 1 dargestellte Ausschnitt aus einem Unternehmens-Kommunikationsnetz umfasst die Endgeräte 105, 106 und 107. Bei den Zahlen 105, 106 und 107 handelt es sich um interne Rufnummern, unter welchen die Endgeräte 105, 106 und 107 innerhalb des Unternehmens-Kommunikationsnetzes erreichbar sind. Ferner ist die Einrichtung NAT (NAT: Network Address Translation), an welche die Endgeräte 105, 106 und 107 angeschlossen sind, Bestandteil des Unternehmens-Kommunikationsnetzes. Über die Einrichtung NAT können die Endgeräte 105, 106 und 107 mit dem Internet INTERNET bzw. mit an das Internet INTERNET angeschlossenen Servern oder Kommunikationsendgeräten, wie z.B. mit den Servern STUN und SIP PROVIDER, kommunizieren. Bei der Einrichtung NAT kann es sich im allgemeinen um einen beliebig ausgestaltete Netzübergang handeln, welcher die Nachrichtenübertragung zwischen dem internen Unternehmens-Kommunikationsnetz und einem externen Kommunikationssystem ermöglicht.

Im folgenden wird der Fall betrachtet, dass es sich bei den Endgeräten 105, 106 und 107 um Geräte handelt, welche VoIP (Voice over IP) nutzen. Bei externen Kommunikationspartnern, mit welchen die Endgeräte 105, 106 und 107 über VoIP kommunizieren, handelt es sich um den Server SIP PROVIDER bzw. um an den Server SIP PROVIDER angeschlossene VoIP-fähige Endgeräte. Die Verbindung zwischen dem Internet INTERNET und den Endgeräten 105, 106 und 107 erfolgt über die Einrichtung NAT. Es sind kommende Rufe, d.h. Rufe, bei welchen der Server SIP PROVIDER das jeweilige Endgerät kontaktiert, und ausgehende Rufe, d.h. Rufe, bei welchen das jeweilige Endgerät den Server SIP PROVIDER kontaktiert, möglich.

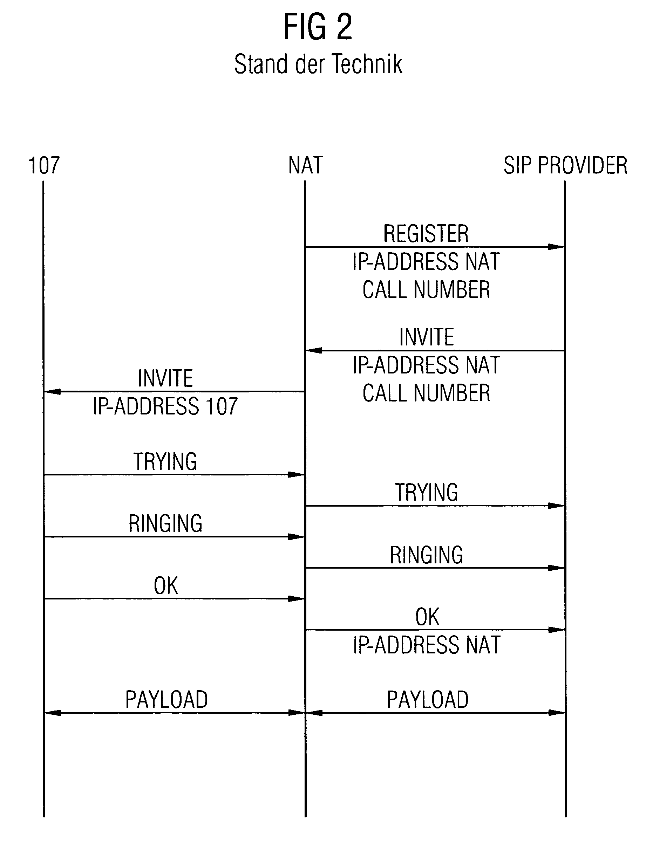

Figur 2 zeigt den Ablauf des Nachrichtenaustausches bei der Aufnahme eines kommenden Rufes gemäß dem Stand der Technik. Die durch Pfeile symbolisierten Nachrichten entsprechen den gemäß SIP (Session Initiation Protocol) standardisierten Nachrichten. Die Einrichtung NAT registriert sich mit der Nachricht REGISTER bei dem Server SIP PROVIDER unter Nennung ihrer IP-Adresse IP-ADDRESS NAT und einer Rufnummer CALL NUMBER. Nach dieser Registrierung ist die Einrichtung NAT dem Server SIP PROVIDER unter der IP-Adresse IP-ADDRESS NAT und der Rufnummer CALL NUMBER bekannt, so dass von dem Server SIP PROVIDER sowohl Rufe an die Rufnummer CALL NUMBER abgesetzt werden können als auch Rufe von der Rufnummer CALL NUMBER angenommen werden können.

In Figur 2 ist der Fall dargestellt, dass der Server SIP PROVIDER bzw. ein mit dem Server SIP PROVIDER verbundenes Endgerät eine VoIP-Verbindung zu dem Endgerät des Unternehmens-Kommunikationsnetzes mit der Rufnummer CALL NUMBER aufbauen möchte. Der Server SIP PROVIDER sendet daher die Nachricht INVITE, welche an die IP-Adresse IP-ADDRESS NAT der Einrichtung NAT adressiert ist, unter Nennung der Rufnummer CALL NUMBER an die Einrichtung NAT. Die Einrichtung NAT weist einen Speicher auf, in welchem eine Zuordnung zwischen den Endgeräten 105, 106 und 107 und verschiedenen Rufnummern abgelegt ist. Im Beispiel der Figur 2 ist die externe Rufnummer CALL NUMBER mit dem Endgerät 107 verknüpft. Weiterhin ist den Endgeräten 105, 106 und 107 jeweils eine interne IP-Adresse zugewiesen, welche lediglich innerhalb des Unternehmens-Kommunikationsnetzes bekannt ist und verwendet wird.

Die Einrichtung NAT ordnet die Rufnummer CALL NUMBER dem Endgerät 107 zu und sendet daher eine Nachricht INVITE unter Verwendung der internen IP-Adresse IP-ADDRESS 107 des Endgerätes 107 an das Endgerät 107. Das Endgerät 107 beabsichtigt, den kommenden Ruf anzunehmen und sendet daher die Nachrichten TRYING, RINGING und OK an die Einrichtung NAT, welche diese an den Server SIP PROVIDER weiterleitet. Bei der Weiterleitung wird die dem Server SIP PROVIDER bekannte IP-Adresse IP-ADDRESS NAT der Einrichtung NAT verwendet, und nicht die interne IP-Adresse IP-ADDRESS 107 des Endgerätes 107, da letztere dem Server SIP PROVIDER nicht bekannt ist. Die Einrichtung NAT leitet die Nachrichten daher nicht transparent weiter, sondern nimmt eine Adressenübersetzung vor. Nach Empfang der Nachrichten TRYING, RINGING und OK durch den Server SIP PROVIDER können VoIP-Daten PAYLOAD zwischen dem Server SIP PROVIDER und dem Endgerät 107 übertragen werden, wobei die Einrichtung NAT die Weiterleitung und Adressenübersetzung der VoIP-Daten PAYLOAD übernimmt.

Wie erläutert wird gemäß dem Stand der Technik am Übergang vom Unternehmens-Kommunikationsnetz zum Internet INTERNET eine zentrale Einrichtung installiert, in Figur 1 als Einrichtung NAT bezeichnet, oftmals auch Border Proxy, IP-IP-Gateway, oder Back-to-Back-User-Agent genannt. In dieser zentralen Einrichtung werden die gesamte Signalisierung und die Nutzdaten beidseitig, d.h. aus Sicht der Endgeräte 105, 106 und 107, und aus Sicht des Internet INTERNET, terminiert. Von außen, d.h. von dem Internet INTERNET aus gesehen, ist lediglich die zentrale Einrichtung mit ihrer IP-Adresse IP-ADDRESS NAT bekannt. Die zentrale Einrichtung führt eine Adressenumwandlung zwischen jeweils einer externen Rufnummer und einer internen IP-Adresse eines Endgerätes 105, 106 oder 107 durch. Diese Adressumwandlung ist nötig, da dem Unternehmens-Kommunikationsnetz lediglich eine begrenzte Zahl an externen IP-Adressen zur Verfügung steht, so dass nicht jedes Endgerät 105, 106 oder 107 extern durch eine eigene IP-Adresse bekannt und adressierbar sein kann.

Die Erfindung ermöglicht es, dass die Einrichtung NAT in Bezug auf die anhand von Figur 2 erläuterten Aufgaben der Registrierung und Adressumwandlung nicht benötigt wird. Die Einrichtung NAT wird, wie im folgenden näher erläutert, lediglich zur transparenten Weiterleitung von Nachrichten zwischen dem Server SIP PROVIDER und den Endgeräten 105, 106 und 107 verwendet. Es wird eine virtuelle Datenbank in Form einer Peer-to-Peer-Datenbank eingesetzt, welche von den Endgeräten 105, 106 und 107 bzw. verteilt auf die Endgeräte 105, 106 und 107 gespeichert wird. Die Endgeräte 105, 106 und 107 bilden somit ein Peer-to-Peer-Netz.

Peer-to-Peer-Verfahren geben Anleitungen zum Ablegen von Daten in Speichern und zum Auffinden von Daten in dem oder den jeweils passenden Speichern. Dabei stellt jeder Peer oder eine Mehrzahl von Peers einen Anteil seines eigenen Speichers zur Speicherung der Peer-to-Peer-Datenbank zur Verfügung. Die Daten/Informationen der Peer-to-Peer-Datenbank befinden sich typischerweise an mehreren Stellen des Peer-to-Peer-Netzes, so dass eine hohe Ausfallsicherheit der durch verteilte Peers gebildeten virtuellen Datenbank erreicht wird. Somit ermöglicht es ein Peer-to-Peer-Verfahren einem Peer, d.h. einem unter Verwendung des Peer-to-Peer-Verfahrens mit anderen Knoten kommunizierenden Knoten, andere Peers aufzufinden, wobei zur Adressierung der Peers ein für das jeweilige Peer-to-Peer-Verfahren spezifischer Namensraum verwendet wird. Weiterhin wird es einem Peer ermöglicht, von anderen Peers gespeicherte Daten auf effiziente Weise aufzufinden.

Als Peer-to-Peer Verfahren kann beispielsweise eingesetzt werden:
- CHORD, beschrieben z.B. in http://www.cs.biu.ac.il/-galk/teaching/p2p/stoica01chord .pdf,
- Tapestry, beschrieben z.B. in http://www.cs.ucsb.edu/-ravenben/tapestry/
- Kademlia beschrieben z.B. in http://www.cs.rice.edu/Conferences/IPTPS02/109.pdf
- Gnutella beschrieben z.B. in http://www.stanford.edu/class/cs244b/gnutella_protocol_0 .4.pdf
- Fasttrack (KaZaA, davon abgeleitet auch Skype) beschrieben z.B. in http://www.kazaa.com ; http://www.skype.com.

An der Speicherung der Peer-to-Peer-Datenbank sind vorzugsweise alle Endgeräte 105, 106 und 107 des Unternehmens-Kommunikationsnetzes beteiligt. Alternativ ist es auch möglich, dass lediglich manche Endgeräte Daten der Peer-to-Peer-Datenbank speichern, und/oder dass auch die Einrichtung NAT bei der Speicherung der Peer-to-Peer-Datenbank mitwirkt. Unabhängig davon, ob sie an der Speicherung der Peer-to-Peer-Datenbank beteiligt sind, können die Endgeräte sowohl auf die Peer-to-Peer-Datenbank zugreifen, d.h. Informationen in die Peer-to-Peer-Datenbank eingeben oder verändern, als auch Informationen aus der Peer-to-Peer-Datenbank auslesen bzw. abfragen.

Die Speicherung der Peer-to-Peer-Datenbank erfolgt redundant, d.h. bei zeitweiligem oder vollständigem Ausfall eines Peer-to-Peer Servants, d.h. eines der an der Speicherung beteiligten Peers, ist die von diesem gespeicherte Information nicht verloren, da sie auch von einem oder mehreren anderen Peer-to-Peer Servants gespeichert wird. Somit ermöglicht das Peer-to-Peer-Verfahren, dass alle Informationen der Peer-to-Peer-Datenbank stets sicher und schnell aufgefunden werden können.

Für jede für die Kommunikation mit dem Server SIP PROVIDER zu verwendende externe Rufnummer des Unternehmens-Kommunikationsnetzes, d.h. für jede Rufnummer, mit welcher die Endgeräte des Unternehmens-Kommunikationsnetzes von externen an den Server SIP PROVIDER angeschlossenen Kommunikationspartnern adressierbar sein sollen, führt ein Endgerät eine Registrierung bei dem Server SIP PROVIDER durch. Hierzu kann die in Figur 2 beschriebene Nachricht REGISTER verwendet werden. Da in der Regel weniger externe Rufnummern als Endgeräte vorhanden sind, führt nicht jedes Endgerät eine Registrierung durch. Dem Server SIP PROVIDER sind somit die zu verwendenden externen Rufnummern in Kombination mit jeweils einer externen IP-Adresse des Unternehmens-Kommunikationsnetzes bekannt.

Bezüglich der von den Endgeräten verwendeten externen IP-Adressen, welche dem Server SIP PROVIDER mit den Registrierungsnachrichten mitgeteilt werden, kann folgendermaßen vorgegangen werden: Es wird eine externe IP-Adresse des Unternehmens-Kommunikationsnetzes verwendet. Jedes der Endgeräte verwendet diese externe IP-Adresse in Kombination mit einer bestimmten Portnummer. Durch Verwendung verschiedener Portnummern für die verschiedenen Endgeräte ist der Einrichtung NAT bekannt, an welches Endgerät eine IP-Nachricht, welche an die externe IP-Adresse in Kombination mit einer Portnummer adressiert ist, weiterzuleiten ist. Auf diese Weise kann jedes Endgerät von einem externen Kommunikationspartner unter Verwendung der externen IP-Adresse in Kombination mit der endgerätspezifischen Portnummer adressiert werden, ohne dass es einer Adressumwandlung durch die Einrichtung NAT bedarf.

Jedes Endgerät ermittelt die von ihm zu verwendende Kombination aus externer IP-Adresse des Unternehmens-Kommunikationsnetzes und Portnummer. Dies kann z.B. über den bekannten Mechanismus STUN (Simple Traversal of User Datagram Protocol through NAT) durch eine Anfrage an den Server STUN erfolgen. Die so ermittelte Kombination aus externer IP-Adresse und Portnummer wird von jedem Endgerät in die Peer-to-Peer-Datenbank eingegeben, so dass der Peer-to-Peer-Datenbank in Bezug auf jedes Endgerät zu entnehmen ist, wie es von extern für IP-Daten zu adressieren ist. Die von einem Endgerät verwendeten IP-Adressen können sich für verschiedene Applikationen, z.B. für SIP-Signalisierung und RTP-Payload (RTP: Real Time Protocol), voneinander unterscheiden. Dies bedeutet, dass in der Peer-to-Peer-Datenbank pro Endgerät mehrere Kombinationen aus externer IP-Adresse des Unternehmens-Kommunikationsnetzes und Portnummer abgelegt sein können.

Jedes Endgerät, welches eine Registrierung bei dem Server SIP PROVIDER vorgenommen hat, gibt alle Informationen, welche für das Absetzen eines ausgehenden Rufes von der jeweiligen externen Rufnummer, für welche die Registrierung erfolgte, nötig sind, in die Peer-to-Peer-Datenbank ein. Hierbei handelt es sich um die folgenden Größen:
● Externe Rufnummer des Unternehmens-Kommunikationsnetzes,
● Externe IP-Adresse des Unternehmens-Kommunikationsnetzes in Kombination mit der Portnummer des jeweiligen Endgerätes, welche in Verbindung mit der externen Rufnummer zur Registrierung verwendet wurde,
● Name bzw. Kundenkennung und Passwort zur Anmeldung bei dem Server SIP PROVIDER,
● SIP-Adresse, welche aus einer vom Server SIP PROVIDER vergebenen Teilnehmerkennung oder Rufnummer und der SIP-Domäne des Servers SIP PROVIDER besteht.

Die Peer-to-Peer-Datenbank enthält somit alle Informationen, welche ein beliebiges Endgerät benötigt, um einen ausgehenden Ruf von einer Rufnummer des Unternehmens-Kommunikationsnetzes an den Server SIP PROVIDER abzusetzen. Beabsichtigt ein Endgerät, eine ausgehende Verbindung aufzubauen, so gibt das Endgerät die Rufnummer des gewünschten externen Kommunikationspartners in die Peer-to-Peer-Datenbank ein bzw. fragt die zum Aufbau einer Verbindung zu diesem externen Kommunikationspartner benötigten Größen unter Nennung der Rufnummer des gewünschten externen Kommunikationspartners ab. Als Antwort empfängt das Endgerät die oben erläuterten Größen, d.h. eine externe Rufnummer des Unternehmens-Kommunikationsnetzes, die externe IP-Adresse des Unternehmens-Kommunikationsnetzes in Kombination mit einer Portnummer, welche in Verbindung mit der externen Rufnummer zur Registrierung verwendet wurde, Name und Passwort, und die SIP-Adresse. Diese Größen werden daraufhin von dem Endgerät verwendet, um eine Kommunikationsverbindung zu dem Server SIP PROVIDER aufzubauen. Die Einrichtung NAT führt hierbei lediglich eine Weiterleitung der Nachrichten zwischen dem jeweiligen Endgerät und dem Internet INTERNET durch.

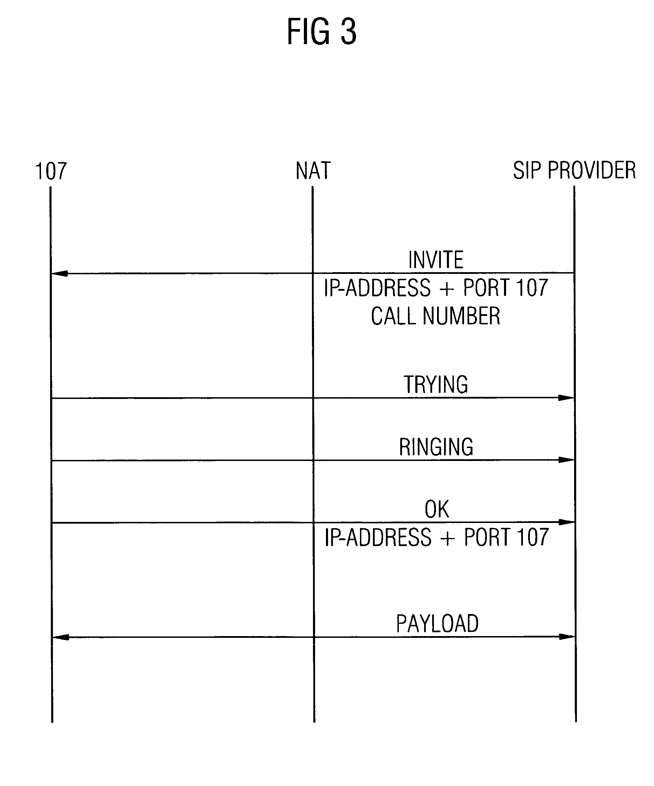

Figur 3 zeigt einen ersten Ablauf des erfindungsgemäßen Verfahrens in Bezug auf kommende Rufe. Es wird davon ausgegangen, dass sich das Endgerät 107 unter der externen IP-Adresse IP-ADDRESS des Unternehmens-Kommunikationsnetzes in Kombination mit seiner Portnummer PORT 107 bei dem Server SIP PROVIDER unter der Rufnummer CALL NUMBER registriert hat. Der Server SIP PROVIDER sendet zum Aufbau einer Verbindung zur Rufnummer CALL NUMBER die Nachricht INVITE an die Einrichtung NAT unter Nennung der externen IP-Adresse IP-ADDRESS des Unternehmens-Kommunikationsnetzes in Kombination mit der Portnummer PORT 107 des Endgerätes 107 und der Rufnummer CALL NUMBER. Da der Einrichtung NAT die von dem Endgerät 107 verwendete Portnummer bekannt ist, leitet die Einrichtung NAT die Nachricht INVITE an das Endgerät 107 weiter.

Das Endgerät 107 beabsichtigt, den Ruf anzunehmen und antwortet mit den Nachrichten TRYING, RINGING und OK, wobei hierfür die externe IP-Adresse IP-ADDRESS des Unternehmens-Kommunikationsnetzes in Kombination mit der Portnummer PORT 107 des Endgerätes 107 verwendet wird. Die Einrichtung NAT leitet die Nachrichten TRYING, RINGING und OK an den Server SIP PROVIDER ohne Bearbeitung weiter. Nach Empfang der Nachrichten TRYING, RINGING und OK durch den Server SIP PROVIDER findet der Austausch von VoIP-Daten PAYLOAD zwischen dem Server SIP PROVIDER und dem Endgerät 107 statt, wobei die VoIP-Daten PAYLOAD von der Einrichtung NAT transparent weitergeleitet werden.

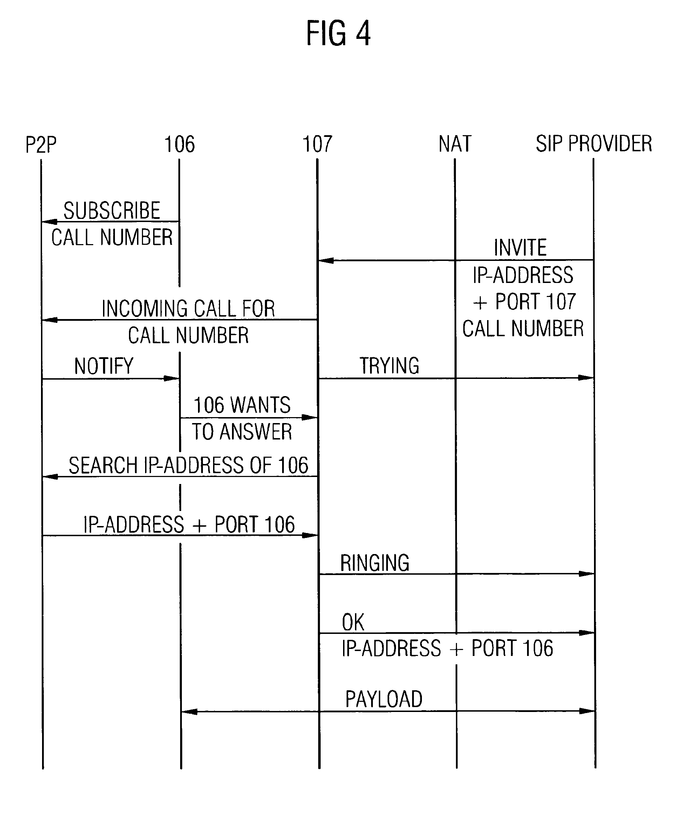

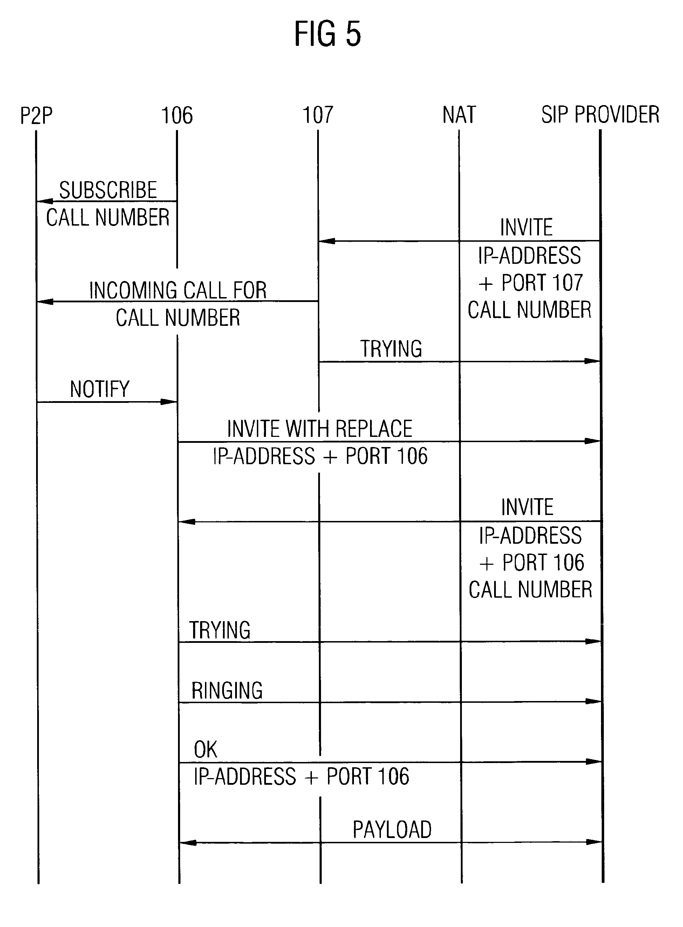

Gemäß der in Bezug auf die Figur 3 erläuterten Situation nimmt das Endgerät 107 den Ruf für die Rufnummer CALL NUMBER an, welches sich zuvor für die Rufnummer CALL NUMBER bei dem Server SIP PROVIDER registriert hat. Durch die Verwendung der Peer-to-Peer-Datenbank ist es alternativ möglich, dass ein anderes Endgerät als dasjenige, welches die Registrierung durchgeführt hat, den Ruf für die Rufnummer CALL NUMBER annimmt, wie in den Figuren 4 und 5 dargestellt. In beiden Fällen wird davon ausgegangen, dass sich das Endgerät 107 unter der Rufnummer CALL NUMBER bei dem Server SIP PROVIDER registriert hat.

Das Endgerät 106 interessiert sich für kommende Anrufe für die Rufnummer CALL NUMBER, obwohl es sich nicht bei dem Server SIP PROVIDER unter der Rufnummer CALL NUMBER registriert hat, und informiert gemäß dem ersten Schritt der Figur 4 die Peer-to-Peer-Datenbank P2P mit der Nachricht SUBSCRIBE CALL NUMBER hiervon. Diese Information über die Subskription des Endgerätes 106 für kommende Rufe an die Rufnummer CALL NUMBER wird in der Peer-to-Peer-Datenbank P2P gespeichert, so dass im Falle eines kommenden Rufs für die Rufnummer CALL NUMBER das Endgerät 106 informiert werden kann. Der Server SIP PROVIDER sendet zur Aufnahme der Kommunikation mit dem Endgerät mit der Rufnummer CALL NUMBER die Nachricht INVITE an die externe IP-Adresse IP-ADDRESS des Unternehmens-Kommunikationsnetzes und die Portnummer PORT 107 des Endgerätes 107. Das Endgerät empfängt die Nachricht INVITE des Servers SIP PROVIDER durch Weiterleitung durch die Einrichtung NAT und informiert die Peer-to-Peer-Datenbank P2P mit der Nachricht INCOMING CALL FOR CALL NUMBER davon, dass für die Rufnummer CALL NUMBER ein Ruf eingeht. Weiterhin antwortet das Endgerät 107 dem Server SIP PROVIDER mit der Nachricht TRYING, welche von der Einrichtung NAT weitergeleitet wird.

Das Endgerät 106 empfängt die automatisch von der Peer-to-Peer-Datenbank P2P erstellte Nachricht NOTIFY zur Benachrichtigung darüber, dass ein Ruf für die Rufnummer CALL NUMBER eingeht. Die Nachricht NOTIFY zeigt dem Endgerät 106 weiterhin an, dass das Endgerät 107 in Bezug auf Rufe der Rufnummer CALL NUMBER registriert ist, so dass das Endgerät 106 das Endgerät 107 mit der Nachricht 106 WANTS TO ANSWER darüber informieren kann, dass es den kommenden Ruf für die Rufnummer CALL NUMBER annehmen möchte. Alternativ kann das Endgerät 106 auch die Peer-to-Peer-Datenbank P2P informieren, dass es den kommenden Ruf für die Rufnummer CALL NUMBER annehmen möchte, woraufhin die Peer-to-Peer-Datenbank P2P das Endgerät 107 hierüber benachrichtigt.

Nachdem dem Endgerät 107 bekannt ist, dass das Endgerät 106 den Ruf anzunehmen beabsichtigt, fragt es von der Peer-to-Peer-Datenbank P2P mit der Nachricht SEARCH IP-ADDRESS of 106 die von dem Endgerät 106 verwendete IP-Adresse ab und empfängt als Abfrageergebnis die externe IP-Adresse IP-ADDRESS des Unternehmens-Kommunikationsnetzes und die Portnummer PORT 106 des Endgerätes 106. Das Endgerät 107 sendet die Nachrichten RINGING und OK an den Server SIP PROVIDER, wobei letztere die von dem Endgerät 106 verwendete IP-Adresse IP-ADDRESS und die Portnummer PORT 106 des Endgerätes 106 anzeigt. Nach Empfang der Nachricht OK durch den Server SIP PROVIDER erfolgt der Austausch von VoIP-Daten PAYLOAD zwischen dem Server SIP PROVIDER und dem Endgerät 106, wobei der Server SIP PROVIDER das Endgerät 106 durch Verwendung der IP-Adresse IP-ADDRESS und der Portnummer PORT 106 des Endgerätes 106 adressiert.

Alternativ zu dem Vorgehen gemäß Figur 4 kann das beschriebene Verfahren nach Empfang der Nachricht NOTIFY durch das Endgerät 106 auch wie in Figur 5 dargestellt ablaufen. Das Endgerät 106 sendet, wenn es den kommenden Ruf für die Rufnummer CALL NUMBER annehmen möchte, die Nachricht INVITE WITH REPLACE an den Server SIP PROVIDER, wobei es die externe IP-Adresse IP-ADDRESS und seine Portnummer PORT 106 angibt. Die Hierzu benötigte IP-Adresse des Servers SIP PROVIDER entnimmt das Endgerät 106 der Nachricht NOTIFY. Die Nachricht INVITE WITH REPLACE zeigt dem Server SIP PROVIDER an, dass nicht die externe IP-Adresse IP-ADDRESS und die Portnummer PORT 107, sondern die externe IP-Adresse IP-ADDRESS und die Portnummer PORT 106 für die folgenden Nachrichtenübertragungen zu verwenden ist. Daraufhin sendet der Server SIP PROVIDER die Nachricht INVITE an die externe IP-Adresse IP-ADDRESS und die Portnummer PORT 106. Das Endgerät 106 antwortet mit den Nachrichten TRYING, RINGING und OK, wobei letztere die externe IP-Adresse IP-ADDRESS und die Portnummer PORT 106 des Endgerätes 106 angibt. Im Anschluss findet der Austausch von VoIP-Daten zwischen dem Server SIP PROVIDER und dem Endgerät 106 statt, wobei der Server SIP PROVIDER das Endgerät 106 durch Verwendung der IP-Adresse IP-ADDRESS und der Portnummer PORT 106 des Endgerätes 106 adressiert.

Alternativ zur Versendung der Nachricht NOTIFY durch die Peer-to-Peer-Datenbank P2P kann die Nachricht NOTIFY auch von dem Endgerät 107 an das oder die für die Rufnummer CALL NUMBER subskribierten Endgeräte gesendet werden. Zur Adressierung der subskribierten Endgeräte fragt das Endgerät 107 die von diesen Endgeräten verwendeten IP-Adressen von der Peer-to-Peer-Datenbank P2P ab.

Gemäß dem beschriebenen Vorgehen ist es möglich, dass Endgeräte, welche sich nicht für die Rufnummer CALL NUMBER registriert haben, kommende Rufe für die Rufnummer CALL NUMBER annehmen. Hierfür wird von der Peer-to-Peer-Datenbank P2P gespeichert, welches oder welche Endgeräte potentiell an kommenden Rufen für die Rufnummer CALL NUMBER interessiert sind, d.h. welche Endgeräte für die Rufnummer CALL NUMBER subskribiert sind. Haben mehrere Endgeräte der Peer-to-Peer-Datenbank P2P mit einer Nachricht SUBSCRIBE CALL NUMBER Interesse an Rufen für die Rufnummer CALL NUMBER signalisiert, sendet die Peer-to-Peer-Datenbank P2P im Falle eines kommenden Rufes für die Rufnummer CALL NUMBER jedem dieser Endgeräte eine Nachricht NOTIFY. Dasjenige Endgerät, welches zuerst auf die Nachricht NOTIFY antwortet, kann den Ruf annehmen. Beabsichtigt dasjenige Endgerät, welches sich unter der Rufnummer CALL NUMBER bei dem Server SIP PROVIDER registriert hat, den kommenden Ruf für die Rufnummer CALL NUMBER anzunehmen, sendet dieses Endgerät keine Nachricht INCOMING CALL FOR CALL NUMBER an die Datenbank P2P.

Die Erfindung weist den Vorteil auf, dass keine zentrale Einrichtung nötig ist, um die Endgeräte des Unternehmens-Kommunikationsnetzes durch Registrierung bei dem Server SIP PROVIDER und Überarbeitung der von beiden Seiten stammenden Nachrichten an den externen Server SIP PROVIDER anzubinden. Vielmehr dient die Einrichtung NAT gemäß der Erfindung lediglich der transparenten Weiterleitung von Nachrichten zwischen den Endgeräten und dem Server SIP PROVIDER. Hierdurch werden die Anforderungen an die Fähigkeiten der Einrichtung an der Grenze zwischen dem Unternehmens-Kommunikationsnetz und dem Internet INTERNET reduziert. Diese Reduktion ist insbesondere in verteilten Netzen von Vorteil, in welchen alle Knoten gleich ausgestaltet sind, und somit alle Knoten in der Lage sein müssen, die Funktion des Knotens an der Grenze wahrzunehmen. Denn in diesem Fall würde zwar zu einem Zeitpunkt nur einer der Knoten die Funktion der Einrichtung an dem Übergang von dem Unternehmens-Kommunikationsnetz zu dem externen System übernehmen, während die anderen Knoten dennoch die zur Erfüllung dieser Funktion erforderliche Ausstattung aufweisen müssen.

Weiterhin ist durch Anwendung der Erfindung die Ausfallsicherheit des Unternehmens-Kommunikationsnetzes in Bezug auf die Kommunikation mit externen Kommunikationpartnern erhöht. Denn die Verfügbarkeit der verteilten Peer-to-Peer-Datenbank ist größer als diejenige einer zentralen Datenbank, da bei Ausfall einer zentralen Datenbank das gesamte Netz betroffen ist, während bei Ausfall eines Gerätes, welches einen Teil der verteilten Datenbank speichert, die Verwendung der verteilten Datenbank aufgrund des redundanten Peer-to-Peer-Speicherverfahrens nicht eingeschränkt ist.

Da die Einrichtung NAT bei dem Aufbau von Kommunikationsverbindungen zwischen Endgeräten des Unternehmens-Kommunikationsnetzes und einem externen System außer der transparenten Nachrichtenweiterleitung sowohl in Bezug auf Signalisierungs- als auch auf Nutzdaten keine weiteren Funktionen ausübt, kann die Einrichtung NAT entfallen. Dies trifft sowohl auf kommende als auch auf ausgehende Rufe zu. Die Funktion der transparenten Nachrichtenweiterleitung kann von einem der Endgeräte übernommen werden.

Während die Erfindung anhand des Protokolls SIP beschrieben wurde, ist sie nicht auf die Verwendung von SIP beschränkt. Es können auch andere Protokolle im Rahmen der Erfindung zum Einsatz kommen, wie z.B. H.323.

## Patentansprüche

1. Verfahren zum Betreiben eines eine Mehrzahl von Knoten (105, 106, 107) umfassenden Kommunikationsnetzes, bei dem eine Datenbank (P2P) mit Identifikationsinformationen (IP-ADDRESS + PORT 106, CALL NUMBER) für die Knoten (105, 106, 107) vorgesehen ist,
wobei ein erster Knoten (106) für eine von ihm initiierte Aufnahme einer Kommunikation mit einem Kommunikationspartner (SIP PROVIDER) eines externen Kommunikationssystems von der Datenbank (P2P) Identifikationsinformationen (IP-ADDRESS + PORT 106, CALL NUMBER) zur Identifikation und/oder Adressierung des ersten Knotens (106) durch den Kommunikationspartner (SIP PROVIDER) abfragt,
**dadurch gekennzeichnet, dass**
mehrere Knoten (105, 106, 107) des Kommunikationsnetzes an der Speicherung der Datenbank (P2P) beteiligt sind und als Identifikationsinformationen (IP-ADDRESS + PORT 106, CALL NUMBER) für jeden Knoten (105, 106, 107) eine externe IP-Adresse des Kommunikationsnetzes in Kombination mit einer knotenspezifischen Portnummer (PORT 106) verwendet wird.

2. Verfahren nach Anspruch 1, bei dem
zuvor die Identifikationsinformationen (IP-ADDRESS + PORT 106, CALL NUMBER) von einem zweiten Knoten (107) dem Kommunikationspartner (SIP PROVIDER) übermittelt und in die Datenbank (P2P) eingegeben werden.

3. Verfahren nach Anspruch 2, bei dem
der zweite Knoten (107) die Identifikationsinformationen (IP-ADDRESS + PORT 106, CALL NUMBER) dem Kommunikationspartner (SIP PROVIDER) im Rahmen einer Registrierung übermittelt.

4. Verfahren zum Betreiben eines eine Mehrzahl von Knoten (105, 106, 107) umfassenden Kommunikationsnetzes, bei dem eine Datenbank (P2P) mit Identifikationsinformationen für die Knoten (105, 106, 107) vorgesehen ist, wobei bei einer von einem Kommunikationspartner (SIP PROVIDER) eines externen Kommunikationssystems initiierten Aufnahme einer Kommunikation mit einem ersten Knoten (107) eine Benachrichtigung eines zweiten Knotens (106) über die von dem Kommunikationspartner (SIP PROVIDER) initiierte Aufnahme der Kommunikation unter Benachrichtigung der Datenbank (P2P) oder Empfang einer Mitteilung von der Datenbank (P2P) erfolgt und
anschließend die Aufnahme der Kommunikation fortgeführt wird zwischen dem zweiten Knoten (106) und dem Kommunikationspartner (SIP PROVIDER),
**dadurch gekennzeichnet, dass**
mehrere Knoten (105, 106, 107) des Kommunikationsnetzes an der Speicherung der Datenbank (P2P) beteiligt sind und als Identifikationsinformationen für jeden Knoten (105, 106, 107) eine externe IP-Adresse des Kommunikationsnetzes in Kombination mit einer knotenspezifischen Portnummer verwendet wird.

5. Verfahren nach Anspruch 4, bei dem
vor der von dem Kommunikationspartner (SIP PROVIDER) initiierten Aufnahme der Kommunikation der erste Knoten (107) dem Kommunikationspartner (SIP PROVIDER) Identifikationsinformationen (CALL NUMBER) übermittelt, und
in der Datenbank (P2P) abgelegt ist, dass eine Benachrichtigung des zweiten Knotens (106) erfolgen soll bei einer von dem Kommunikationspartner (SIP PROVIDER) initiierten die Identifikationsinformationen (CALL NUMBER) zur Adressierung verwendenden Aufnahme der Kommunikation.

6. Verfahren nach Anspruch 4 oder 5, bei dem der erste Knoten (107) den Kommunikationspartner (SIP PROVIDER) benachrichtigt, dass die Aufnahme der Kommunikation mit dem zweiten Knoten (106) fortgeführt werden soll, oder
der zweite Knoten (106) den Kommunikationspartner (SIP PROVIDER) benachrichtigt, dass die Aufnahme der Kommunikation mit dem zweiten Knoten (106) fortgeführt werden soll.

7. Verfahren nach einem der Ansprüche 1 bis 6, bei dem die Knoten (105, 106, 107) des Kommunikationssystems gleichberechtigt sind hinsichtlich des Zugriffs auf die Datenbank (P2P).

8. Verfahren nach Anspruch 7, bei dem
es sich bei der Datenbank (P2P) um eine Peer-to-Peer-Datenbank handelt, und der Zugriff auf die Datenbank (P2P) unter Verwendung eines Peer-to-Peer-Verfahrens erfolgt.

9. Verfahren nach einem der Ansprüche 1 bis 8, bei dem die Aufnahme der Kommunikation unter Verwendung von SIP erfolgt.

10. Verfahren nach einem der Ansprüche 1 bis 9, bei dem
es sich bei der Kommunikation um eine Voice over IP, VoIP, Kommunikation handelt.

11. Knoten (106) für ein Kommunikationsnetz, mit
Mitteln zum Mitwirken an einer Speicherung einer Datenbank (P2P) mit Identifikationsinformationen (IP-ADDRESS + PORT 106, CALL NUMBER) für Knoten (105, 106, 107) des Kommunikationsnetzes,
Mitteln zum Initiieren einer Aufnahme einer Kommunikation mit einem Kommunikationspartner (SIP PROVIDER) eines externen Kommunikationssystems, und
Mitteln zum Abfragen von der Datenbank (P2P) von Identifikationsinformationen (IP-ADDRESS + PORT 106, CALL NUMBER) zur Identifikation und/oder Adressierung des Knotens (106) durch den Kommunikationspartner (SIP PROVIDER) und zum Verwenden der Identifikationsinformationen (IP-ADDRESS + PORT 106, CALL NUMBER) bei der Aufnahme der Kommunikation,
**gekennzeichnet durch**
Mittel zum Mitwirken an einer Speicherung der Datenbank (P2P) verteilt auf mehrere Knoten (105, 106, 107) des Kommunikationsnetzes und
Mittel zum Kombinieren der Identifikationsinformationen (IP-ADDRESS + PORT 106, CALL NUMBER) für jeden Knoten (105, 106, 107) aus einer externen IP-Adresse des Kommunikationsnetzes mit einer knotenspezifischen Portnummer (PORT 106).

12. Knoten (106) für ein Kommunikationsnetz, mit
Mitteln zum Mitwirken an einer Speicherung einer Datenbank (P2P) mit Identifikationsinformationen für Knoten (105, 106, 107) des Kommunikationsnetzes,
Mitteln zum Empfangen einer Benachrichtigung über eine von einem Kommunikationspartner (SIP PROVIDER) eines externen Kommunikationssystems initiierte Aufnahme einer Kommunikation mit einem anderen Knoten (107) des Kommunikationsnetzes von dem anderen Knoten (107) oder von der Datenbank (P2P), und
Mitteln zum Fortführen der Aufnahme der Kommunikation mit dem Kommunikationspartner (SIP PROVIDER) nach der Benachrichtigung,
**gekennzeichnet durch**
Mittel zum Mitwirken an einer Speicherung der Datenbank (P2P) verteilt auf mehrere Knoten (105, 106, 107) des Kommunikationsnetzes und
Mittel zum Kombinieren der Identifikationsinformationen für jeden Knoten (105, 106, 107) aus einer externen IP-Adresse des Kommunikationsnetzes mit einer knotenspezifischen Portnummer.

## Claims

1. Method for operating a communication network comprising a plurality of nodes (105, 106, 107), in which a databank (P2P) is provided with identification information (IP-ADDRESS + PORT 106, CALL NUMBER) for the nodes (105, 106, 107),
whereby a first node (106) extracts from the databank (P2P) identification information (IP-ADDRESS + PORT 106, CALL NUMBER) for identifying and / or addressing the first node (106) by the correspondent (SIP PROVIDER) for a recording, initiated by said first node, of a communication with the correspondent (SIP PROVIDER) of an external communication system,
**characterised in that** a plurality of nodes (105, 106, 107) of the communication network are involved in the storage of the databank (P2P) and an external IP address of the communication network in combination with a node-specific port number (PORT 106) is used as identification information (IP-ADDRESS + PORT 106, CALL NUMBER) for each node (105, 106, 107).

2. Method according to claim 1, in which beforehand the identification information (IP-ADDRESS + PORT 106, CALL NUMBER) is communicated to the correspondent (SIP PROVIDER) by a second node (107) and entered into the databank (P2P).

3. Method according to claim 2, in which the second node (107) communicates the identification information (IP-ADDRESS + PORT 106, CALL NUMBER) to the correspondent (SIP PROVIDER) in the context of a registration.

4. Method for operating a communication network comprising a plurality of nodes (105, 106, 107), in which a databank (P2P) is provided with identification information for the nodes (105, 106, 107),
whereby, in the event of a recording of a communication with a first node (107), said recording being initiated by a correspondent (SIP PROVIDER) of an external communication system, a notification of a second node (106) occurs about the recording of the communication, said recording being initiated by the correspondent (SIP PROVIDER), with notification of the databank (P2P) or receipt of a message from the databank (P2P) and subsequently the recording of the communication is continued between the two nodes (106) and the correspondent (SIP PROVIDER),
**characterised in that** a plurality of nodes (105, 106, 107) of the communication network are involved in the storage of the databank (P2P) and an external IP address of the communication network in combination with a node-specific port number is used as identification information for each node (105, 106, 107).

5. Method according to claim 4, in which before the recording, initiated by the correspondent (SIP PROVIDER), of the communication of the first node (107), identification information (CALL NUMBER) is passed to the correspondent (SIP PROVIDER), and it is saved in the databank (P2P) that a notification of the second node (106) is to be made in the event of a recording of the communication, said recording having been initiated by the correspondent (SIP PROVIDER) and using the identification information (CALL NUMBER) for addressing.

6. Method according to claim 4 or 5 in which the first node (107) notifies the correspondent (SIP PROVIDER) that the recording of the communication is to be continued with the second node (106), or the second node (106) notifies the correspondent (SIP PROVIDER) that the recording of the communication is to be continued with the second node (106).

7. Method according to any one of claims 1 to 6 in which the nodes (105, 106, 107) of the communication system are equally authorised with regard to access to the databank (P2P).

8. Method according to claim 7 in which the databank (P2P) is a peer-to-peer databank, and the access to the databank (P2P) occurs by using a peer-to-peer method.

9. Method according to any one of claims 1 to 8 in which the recording of the communication occurs by using SIP.

10. Method according to any one of claims 1 to 9 in which the communication is a voice-over-IP, VoIP, communication.

11. Node (106) for a communication network with means for collaborating in a storage of a databank (P2P) with identification information (IP-ADDRESS + PORT 106, CALL NUMBER) for nodes (105, 106, 107) of the communication network, means to initiate a recording of a communication with a correspondent (SIP PROVIDER) of an external communication system, and means for extracting from the databank (P2P) identification information (IP-ADDRESS + PORT 106, CALL NUMBER) for identifying and / or addressing the node (106) by the correspondent (SIP PROVIDER) and for using the identification information (IP-ADDRESS + PORT 106, CALL NUMBER) in the recording of the communication,
**characterised by** means for collaborating in a storage of the databank (P2P) distributed over a plurality of nodes (105, 106, 107) of the communication network and means to combine the identification information (IP-ADDRESS + PORT 106, CALL NUMBER) for each node (105, 106, 107) from an external IP address of the communication network with a node-specific port number (PORT 106).

12. Node (106) for a communication network with means for collaborating in a storage of a databank (P2P) with identification information for nodes (105, 106, 107) of the communication network, means to receive a notification about a recording, initiated by a correspondent (SIP PROVIDER) of an external communication system, of a communication with another node (107) of the communication network from the other node (107) or from the databank (P2P), and means to continue the recording of the communication with the correspondent (SIP PROVIDER) after the notification,
**characterised by** means to collaborate in a storage of the databank (P2P) distributed over a plurality of nodes (105, 106, 107) of the communication network and means to combine the identification information for each node (105, 106, 107) from an external IP address of the communication network with a node-specific port number.

## Revendications

1. Procédé de fonctionnement d'un réseau de communication comportant une pluralité de noeuds (105, 106, 107), pour lequel une base de données (P2P) avec des informations d'identification (IP-ADDRESS + PORT 106, CALL NUMBER) pour les noeuds (105, 106, 107) est prévue,
un premier noeud (106) pour un déclenchement initié par celui-ci d'une communication avec un partenaire de communication (SIP PROVIDER) d'un système de communication externe demandant à la base de données (P2P) des informations d'identification (IP-ADDRESS + PORT 106, CALL NUMBER) pour l'identification et/ou l'adressage du premier noeud (106) par le partenaire de communication (SIP PROVIDER),
**caractérisé en ce que**
plusieurs noeuds (105, 106, 107) du réseau de communication participent à l'enregistrement de la base de données (P2P) et comme informations d'identification (IP-ADDRESS + PORT 106, CALL NUMBER) pour chaque noeud (105, 106, 107), une adresse IP externe du réseau de communication est utilisée en combinaison avec un numéro de port (PORT 106) spécifique au noeud.

2. Procédé selon la revendication 1, pour lequel les informations d'identification (IP-ADDRESS + PORT 106, CALL NUMBER) sont transmises au préalable par un second noeud (107) au partenaire de communication (SIP PROVIDER) et entrées dans la base de données (P2P).

3. Procédé selon la revendication 2, pour lequel le second noeud (107) transmet les informations d'identification (IP-ADDRESS + PORT 106, CALL NUMBER) au partenaire de communication (SIP PROVIDER) dans le cadre d'un enregistrement.

4. Procédé de fonctionnement d'un réseau de communication comportant une pluralité de noeuds (105, 106, 107), pour lequel une base de données (P2P) avec des informations d'identification pour les noeuds (105, 106, 107) est prévue, pour un déclenchement, initié par un partenaire de communication (SIP PROVIDER) d'un système de communication externe, d'une communication avec un premier noeud (107), un avis d'un second noeud (106) étant réalisé par le déclenchement initié par le partenaire de communication (SIP PROVIDER) de la communication en informant la base de données (P2P) ou en recevant un message de la base de données (P2P) et
le déclenchement de la communication étant ensuite poursuivi entre le second noeud (106) et le partenaire de communication (SIP PROVIDER),
**caractérisé en ce que**
plusieurs noeuds (105, 106, 107) du réseau de communication participent à l'enregistrement de la base de données (P2P) et comme informations d'identification pour chaque noeud (105, 106, 107), une adresse IP externe du réseau de communication est utilisée en combinaison avec un numéro de port spécifique au noeud.

5. Procédé selon la revendication 4, pour lequel avant le déclenchement initié par le partenaire de communication (SIP PROVIDER) de la communication, le premier noeud (107) transmet des informations d'identification (CALL NUMBER) au partenaire de communication (SIP PROVIDER), et il est enregistré dans la base de données qu'un avis du second noeud (106) doit être réalisé pour un déclenchement de la communication initié par le partenaire de communication (SIP PROVIDER), utilisant les informations d'identification (CALL NUMBER) pour l'adressage.

6. Procédé selon la revendication 4 ou 5, pour lequel le premier noeud (107) informe le partenaire de communication (SIP PROVIDER) que le déclenchement de la communication doit être poursuivi avec le second noeud (106) ou le second noeud (106) informe le partenaire de communication (SIP PROVIDER) que le déclenchement de la communication doit être poursuivi avec le second noeud (106).

7. Procédé selon l'une quelconque des revendications 1 à 6, pour lequel les noeuds (105, 106, 107) du système de communication disposent des mêmes autorisations d'accès à la base de données (P2P).

8. Procédé selon la revendication 7, pour lequel il s'agit pour la base de données (P2P) d'une base de données pair-a-pair et l'accès à la base de données (P2P) est réalisé en utilisant un procédé pair-a-pair.

9. Procédé selon l'une quelconque des revendications 1 à 8, pour lequel le déclenchement de la communication est réalisé en utilisant le SIP.

10. Procédé selon l'une quelconque des revendications 1 à 9, pour lequel il s'agit pour la communication d'une communication Voice over IP, VoIP.

11. Noeud (106) pour un réseau de communication, avec des moyens pour participer à un enregistrement d'une base de données (P2P) avec des informations d'identification (IP-ADDRESS + PORT 106, CALL NUMBER) pour des noeud (105, 106, 107) du réseau de communication,
des moyens pour initier un déclenchement d'une communication avec un partenaire de communication (SIP PROVIDER) d'un système de communication externe, et
des moyens pour demander à la base de données (P2P) des informations d'identification (IP-ADDRESS + PORT 106, CALL NUMBER) pour l'identification et/ou l'adressage du noeud (106) par le partenaire de communication (SIP PROVIDER) et pour l'utilisation des informations d'identification (IP-ADDRESS + PORT 106, CALL NUMBER) pour le déclenchement de la communication,
**caractérisé par**
des moyens pour participer à un enregistrement de la base de données (P2P) répartis sur plusieurs noeuds (105, 106, 107) du réseau de communication et
des moyens pour combiner les informations d'identification (IP-ADDRESS + PORT 106, CALL NUMBER) pour chaque noeud (105, 106, 107) à partir d'une adresse IP externe du réseau de communication avec un numéro de port spécifique au noeud (PORT 106).

12. Noeud (106) pour un réseau de communication, avec des moyens pour participer à un enregistrement d'une base de données (P2P) avec des informations d'identification pour des noeuds (105, 106, 107) du réseau de communication,
des moyens pour recevoir un avis d'un déclenchement initié par un partenaire de communication (SIP PROVIDER) d'un système de communication externe d'une communication avec un autre noeud (107) du réseau de communication de l'autre noeud (107) ou de la base de données (P2P), et des moyens pour poursuivre le déclenchement de la communication avec le partenaire de communication (SIP PROVIDER) après l'avis,
**caractérisé par**
des moyens pour participer à un enregistrement d'une base de données (P2P) répartis sur plusieurs noeuds (105, 106, 107) du réseau de communication et
des moyens pour combiner les informations d'identification pour chaque noeud (105, 106, 107) à partir d'une adresse IP externe du réseau de communication avec un numéro de port spécifique au noeud.
